# EUROPÄISCHE PATENTSCHRIFT

(11) **EP 2 900 612 B1**
(45) Veröffentlichungstag und Bekanntmachung des Hinweises auf die Patenterteilung: **17.10.2018**
(21) Anmeldenummer: 13752647.1
(22) Anmeldetag: 26.08.2013
(51) Int. Cl.: C03B 23/11, C03B 23/18

(54) **VERFAHREN UND VORRICHTUNG ZUM WÄRMEWEICHEN VERSCHLIESSEN VON GLASROHREN**
METHOD AND DEVICE FOR THE HEAT SEALING OF GLASS TUBES
PROCÉDÉ ET DISPOSITIF D'OBTURATION DE TUBES DE VERRE PAR RAMOLLISSEMENT THERMIQUE

(30) Priorität: 27.09.2012 DE 102012109189
(43) Veröffentlichungstag der Anmeldung: 05.08.2015
(73) Patentinhaber: SCHOTT AG, 55122 Mainz (DE)
(72) Erfinder: SCHMID, Albert, 95666 Mitterteich (DE); SCHIRMEL, Thomas, 95709 Töstau (DE); HENKE, Heinz-Josef, 95666 Mitterteich (DE); HAMAN, Carsten, 95692 Konnersreuth (DE); VÖLK, Franz, 95688 Friedenfels (DE)
(74) Vertreter: 2K Patentanwälte Blasberg Kewitz & Reichel
(86) Internationale Anmeldenummer: PCT/EP2013/067640
(87) Internationale Veröffentlichungsnummer: WO 2014/048653

(56) Entgegenhaltungen:
- DE-B- 1 173 210
- DE-B3-102004 019 544
- US-A- 2 633 672
- US-A- 3 170 782

## Beschreibung

### GEBIET DER ERFINDUNG

Die vorliegende Erfindung betrifft ein Verfahren und Vorrichtung zum wärmeweichen Verschließen von Glasrohren, insbesondere von Glasrohren, die zur Herstellung von Primärpackmitteln aus Glas zur Aufbewahrung von pharmazeutisch wirksamen Substanzen dienen sollen.

### HINTERGRUND DER ERFINDUNG

Bei der Herstellung von Glasrohren werden üblicherweise von dem Glasrohrstrang (Rohrzug) Glasrohre abgetrennt, die dann weiter verarbeitet werden. Diese Glasrohre können Standardlängen von beispielsweise 1,5 m aufweisen, können aber auch gleich zu vergleichsweise kurzen Glasrohren von wenigen Zentimetern Länge abgelängt werden, um dann unmittelbar zu Primärpackmitteln zur Aufbewahrung von pharmazeutischen Substanzen weiter verarbeitet werden zu können, beispielsweise zu Glasampullen, Glasfläschchen oder Glasspritzen. Gerade für letztgenannte Anwendungen ist es unerlässlich, dass im Laufe der Verarbeitung und Handhabung keinerlei Fremdstoffe in den Innenraum der Glasrohre gelangen, da diese daraus nur unter hohem Aufwand wieder entfernt werden können.

Deshalb werden die Rohrenden zur Vermeidung von Partikelablagerungen im Glasrohr in einer speziellen Rohrenden-Bearbeitungsmaschine unmittelbar am Rohrzug wärmeweich abgetrennt und dabei die Rohre verschlossen.

Bei den bekannten Verfahren bearbeitet man die Rohre üblicherweise auf rotierenden Rollen einzeln und trennt das Glasrohr durch Erhitzen einer Ringzone und anschließendes Auseinanderfahren der Rolleneinheiten,

GB 174049 A offenbart eine Vorrichtung, bei der das Glasrohr von Rollenpaaren kontinuierlich um die Längsachse gedreht wird. Ein nahe dem Umfangsrand des Glasrohrs angeordneter Brenner erhitzt das sich drehende Glasrohr, bis dieses ausreichend erweicht ist. Im wärmeweichen Zustand des Glasrohrs werden die Rollenpaare entlang der Längsachse des Glasrohrs auseinander gezogen, um das Glasrohr zu trennen. Dabei verschmelzen die Ränder an den Endabschnitten des Glasrohrs zu einem flachen Boden, um so das Glasrohrende zu verschließen. Der Anpressdruck, der erforderlich ist, damit die Rollenpaare das Glasrohr gleichmäßig drehen können, bedingt jedoch eine Riss- und Kratzergefahr. Die Kontaktflächen sind deshalb potentielle Fehlerquellen für Verschmutzung und Abrieb.

Nach der DE 1114992 A werden die Glasrohre von Haltemitteln umklammert und mittels einer Vertikalfördereinrichtung entlang einer vertikalen Förderstrecke gefördert und dabei mittels mehrerer ringförmiger Erweichungsbrenner erhitzt. Mitlaufende Zangen greifen die erweichten Endabschnitte des Glasrohrs und werden auseinandergezogen. Das Abtrennen der wärmeweichen Endabschnitte wird mittels seitlich angebrachter Hindernisse, beispielsweise von Messern, weiter unterstützt. Durch den senkrechten Transport fallen brechende Rohre oder Teilstücke davon jedoch auf nachfolgende Glasrohre, was zum Bruch oder zur Beschädigung der Glasrohre führen kann.

DE 1127042 A offenbart ein weiteres Verfahren, bei dem das Glasrohr mit Hilfe mehrerer Rollenpaare, die an den jeweiligen Endabschnitt des Glasrohrs angreifen, in eine gleichmäßige Drehbewegung versetzt wird. Eine einwirkende Gasflamme erweicht den Trennbereich, während das Glasrohr gedreht wird. Eine weitere schräg ansetzende Rolle zieht den jeweiligen Endabschnitt axial von dem Glasrohr ab. Gleichzeitig verschmilzt die Gasflamme den Endabschnitt zu einem flachen Boden. Aufgrund von Toleranzen des Glasrohrs, fluktuierender Reibungsverhältnisse und von Gleiteffekten kommt es jedoch zu uneindeutigen und schwankenden Bewegungsabläufen oder gar zu Taumelbewegungen und damit streuenden Ergebnissen beim verschlossenen Rohrende. Da die Glasrohre getaktet bearbeitet werden, bleibt für die Bearbeitung relativ wenig Zeit.

DE 19908342 C1 offenbart ein weiteres Verfahren, bei dem eine zum Glasrohr koaxial gelagerte Schnecke so synchron zur Förderbewegung des Glasrohrs gedreht wird, dass die Umfangskante der Schnecke die Mantelfläche des Glasrohrs an einem bestimmten Eingriffspunkt erreicht und in einer achssenkrechten Ebene um das Glasrohr herumwandert, um das Glasrohr abzulängen. Dabei wird das Glasrohrende jedoch nicht abgezogen.

EP 1834931 A2 offenbart ein Verfahren zum Aufschmelzen der Enden von Glasrohren. Hierzu wird ein längeres Glasrohr zunächst in vergleichsweise kurze Glasrohre abgelängt, die dann auf einer Greiferkette abgelegt werden. Dabei sind die Enden der Glasrohre von der Seite her frei zugänglich. Die Glasrohre werden über eine Anhebeschiene geführt und dadurch angehoben. Beim anschließenden Abrollen auf der Anhebeschiene werden die Glasrohre in eine Rotation versetzt, während das Ende des Glasrohrs von einer Gasflamme aufgeschmolzen wird. Ein Verschließen des Glasrohrendes wird nicht offenbart.

US 2633672 A offenbart ein Verfahren zum wärmeweichen Verschließen von Glasrohren zur Herstellung von Ampullen, bei dem diese entlang einer Förderstrecke bewegt werden und von mitlaufenden Gummibändern in eine gleichmäßige Rotation um deren Längsachse versetzt werden. Dabei wird die Drehachse der Ampullen mittels eines Zylinders stabilisiert. Die rotierenden Ampullen werden an einer Brennerleiste vorbei bewegt und so gleichmäßig um ihren Umfang herum erwärmt und erweicht. Dabei erweicht der Halsabschnitt, der von einem mitlaufenden Finger mit einem U-förmigen Haken axial abgezogen wird, sodass der Endabschnitt verschmilzt und die Ampulle durch einen Pfropfen verschlossen wird. Um die Glasrohre in eine gleichmäßige Rotation zu versetzen, ist ein erheblicher Aufwand erforderlich. Das Verschließen der Glasrohrenden mittels eines einfachen Pfropfens ist für viele Anwendungen ungeeignet.

US 3170782 A offenbart ein Verfahren zum wärmeweichen Verschließen von Glasrohren zur Herstellung von Ampullen, bei dem Glasrohre durch ein sich fortwährend bewegendes Band in eine Drehbewegung um ihre Längsachse versetzt werden und dabei durch senkrechte stationäre Kontaktstifte zurück gehalten werden. Die Rotation der Glasrohre erfolgt im Bereich eines Gasbrenners, der die Glasrohre an ihrem Ende erweicht. Der Betrieb erfolgt jedoch nicht kontinuierlich sondern getaktet.

### ZUSAMMENFASSUNG DER ERFINDUNG

Aufgabe der vorliegenden Erfindung ist es, ein verbessertes Verfahren zum wärmeweichen Verschließen von Glasrohren bereitzustellen, mit dem Glasrohre kostengünstiger, gleichmäßiger und sehr flexibel verschlossen werden können. Ferner soll eine entsprechende Vorrichtung bereitgestellt werden.

Diese Aufgaben werden durch ein Verfahren nach Anspruch 1 sowie durch eine Vorrichtung nach Anspruch 7 gelöst. Weitere bevorzugte Ausführungsformen sind Gegenstand der rückbezogenen Patentansprüche.

Bei einem Verfahren zum wärmeweichen Verschließen von Glasrohren gemäß der vorliegenden Erfindung wird das Glasrohr an einer Trennstelle nahe einem Endabschnitt des Glasrohrs erweicht, entlang einer Förderstrecke mit einer konstanten Geschwindigkeit gefordert und entlang einer Abzieheinrichtung mit einer vorbestimmten Geschwindigkeit quer zur Längsachse gefördert, wobei das Glasrohr um seine Längsachse gedreht und dabei erwärmt, bis ein wärmeweicher Zustand erreicht ist, in dem der Endabschnitt ohne Weiteres abgetrennt werden kann. Dabei wird der wärmeweiche Endabschnitt des Glasrohrs mittels einer Abzieheinrichtung, die drehstarr ist oder sich mit einer Winkelgeschwindigkeit, die verschieden ist zu der Winkelgeschwindigkeit des Glasrohrs, dreht, von der Trennstelle so abgezogen, dass das Glasrohr an der Trennstelle während des Trennvorgangs zugleich zugeschmolzen wird, wobei die Abzieheinrichtung korrespondierend zur Bewegung des Glasrohrs quer zur Längsachse bewegt wird, während der Endabschnitt von der Trennstelle abgezogen wird. Erfindungsgemäß wird das Glasrohr durch das Fördern entlang der Förderstrecke und Abrollen auf zumindest einer ortsfesten Auflageleiste in eine Rotation um die Längsachse versetzt, um in einer rollenden Vorwärtsbewegung mit konstanter Geschwindigkeit quer zur Längsachse entlang der Abzieheinrichtung gefördert zu werden, wobei die Auflageleiste schräg aufwärts geneigt ist.

Durch die Rotation des Rohres auf der Förderstrecke können einfache, lineare Erweichungsbrenner anstelle von Ringbrennern unterhalb der Rohre eingesetzt werden. Die Überlagerung der Drehbewegung des Rohrs mit dem ortsfest fixierten (oder sich alternativ mit einer anderen Winkelgeschwindigkeit drehenden) Endabschnitt bewirkt eine gleichmäßigere Einschnürung des Endabschnitts und somit ein homogeneres Verschließen. Insbesondere können die Prozessparameter beim Einschnüren und Zuschmelzen der Glasrohrenden erfindungsgemäß in einfacher Weise flexibel vorgegeben werden.

Bei einem Verfahren gemäß der Erfindung wird das Glasrohr entlang der Abzieheinrichtung mit einer vorbestimmten Geschwindigkeit quer zur Längsachse entlang einer Förderstrecke gefördert. Diese Förderstrecke kann insbesondere bei Band- oder Ketten-Fördereinrichtungen im Wesentlichen linear und bevorzugt umlaufend ausgebildet sein, kann jedoch grundsätzlich auch im Querschnitt kreisförmig oder elliptisch gestaltet sein, beispielsweise in Gestalt eines Förder-Karussells. Bevorzugt werden die Glasrohre kontinuierlich und exakt synchron zur stromaufwärts befindlichen Glasrohr-Ziehanlage gefördert. Grundsätzlich können die Glasrohre jedoch auch getaktet gefördert werden. Bevorzugt werden die Glasrohre jedenfalls im Erwärmungsbereich sowie im nachgeordneten Abtrennbereich mit einer konstanten Geschwindigkeit gefördert. Hierzu kann eine präzise Geschwindigkeits-Steuerung oder - Regelung vorgesehen sein.

Auf der Förderstrecke werden die Glasrohre dabei in eine Rotation versetzt, die jedenfalls im Erwärmungsbereich sowie im nachgeordneten Abtrennbereich gleichmäßig und konstant ist, sodass dort konstante und reproduzierbare Prozessbedingungen vorherrschen.

Grundsätzlich können die Glasrohre hierzu mittels Rollenpaaren, die entlang der Förderstrecke bewegt werden, wie vorstehend beschrieben, in eine Rotation versetzt werden. Gemäß einer bevorzugten Ausführungsform wird das Glasrohr jedoch durch Abrollen auf zumindest einer ortsfesten Auflageleiste in eine Rotation um die Längsachse versetzt und somit in einer rollenden Vorwärtsbewegung quer zur Längsachse entlang der Abzieheinrichtung gefördert. Sämtliche Kontaktstellen zwischen der Auflageleiste sowie der Fördereinrichtung (beispielsweise Förderband oder Kontaktstifte oder -stege) und dem Glasrohr sind hierzu mit einem reibungsarmen, hochtemperaturfesten Material beschichtet oder aus diesem ausgebildet, insbesondere aus Teflon oder Graphit, um Abrieb, Kratzspuren und Inhomogenitäten auf der Umfangswand der Glasrohre zu vermeiden. Bevorzugt werden die Glasrohre dabei von Schubmitteln der Fördereinrichtung, die das Glasrohr nur lokal an vergleichsweise kurzen Abschnitten berühren, entlang der Förderstrecke geschoben oder gezogen. Diese Schubmittel können beispielsweise als vertikale Kontaktstifte oder -stege ausgebildet sein, sodass der größte Teil des Glasrohrs auf der Förderstrecke nicht aufliegt.

Gemäß einer weiteren Ausführungsform ist die Auflageleiste unter einem Winkel von 3° bis 25° schräg aufwärts geneigt, sodass die resultierende Hangantriebskraft die Glasrohre stets zuverlässig jedoch mit geringer Kraft gegen die Schubmittel der Fördereinrichtung drückt. Der Neigungswinkel der Auflageleiste sowie der Förderstrecke kann dazu auch verstellbar sein, auch während einer laufenden Produktion.

Gemäß einer weiteren Ausführungsform wird die Abzieheinrichtung korrespondierend zur Bewegung des Glasrohrs quer zur Längsachse bewegt, während der Endabschnitt von der Trennstelle abgezogen wird. Hierzu ist der Abzieheinrichtung zumindest ein Antrieb zugeordnet, beispielsweise ein Elektromotor oder Linearmotor. Bevorzugt erfolgt die Bewegung der Abzieheinrichtung im Abtrennbereich und entlang der Förderstrecke exakt synchron zur Förderbewegung der Glasrohre. Die Antriebe geben also insgesamt eine Abziehkurve der Abzieheinrichtung korrespondierend zur Bewegung des Glasrohrs quer zur Längsachse vor. Auf diese Weise kann stets eine vorbestimmte Relativlage der Abzieheinrichtung relativ zu dem sich drehenden Rohrende im Abtrennbereich vorgegeben werden. Bevorzugt wird die Abzieheinrichtung exakt zentriert zum jeweiligen Rohrende gehalten, um ein symmetrisches Verschließen des jeweiligen Rohrendes zu bewirken.

Gemäß einer weiteren Ausführungsform kann die Abziehkurve der Abzieheinrichtung jedoch auch gezielt von der Bewegung der Glasrohre im Abtrennbereich abweichen, insbesondere geringfügig abweichen. Mit dieser Abweichung der Bewegungsbahnen von Glasrohrende und Abzieheinrichtung, die auch zeitabhängig und nicht konstant sein kann, steht erfindungsgemäß ein weiterer Parameter zur Verfügung, um die Prozessbedingungen beim Abtrennen und Verschließen der Rohrenden vorzugeben.

Gemäß einer weiteren Ausführungsform wird die Abziehkurve mittels einer Steuereinrichtung, beispielsweise eines Mikroprozessors, in Abhängigkeit vom Durchmesser und/oder von der Bewegung des Glasrohrs in Richtung der Längsachse und/oder quer zur Längsachse und/oder vom Typ des zu verschließenden Glasrohrs gesteuert. Somit können die Prozessbedingungen beim wärmeweichen Abtrennen und Verschließen weiter variiert und gesteuert werden.

Gemäß einer weiteren Ausführungsform wird der Durchmesser und/oder die Bewegung des Glasrohrs quer zur Längsachse und/oder der Typ des zu verschließenden Glasrohrs von einem Sensor erfasst und steuert die Steuereinrichtung basierend auf dem erfassten Durchmesser und/oder der Bewegung des Glasrohrs quer zur Längsachse und/oder dem Typ des zu verschließenden Glasrohrs die Abziehkurve. Damit können die Prozessbedingungen beim wärmeweichen Abtrennen und Verschließen noch genauer und individueller abgestimmt auf das jeweilige Glasrohr variiert und gesteuert werden.

Gemäß einer weiteren Ausführungsform wird die Form eines verschlossenen Endabschnitts des Glasrohrs nahe der Trennstelle mittels einer der Abzieheinrichtung nachgeordneten Blasdüse beeinflusst. Dadurch kann insbesondere eine Wölbung des Bodens am verschlossenen Rohrende in einfacher Weise beeinflusst werden.

Gemäß einer weiteren bevorzugten Ausführungsform wird die Rotation des Endabschnitts des Glasrohrs, also das Rohrende, durch die Abzieheinrichtung, insbesondere durch einen Greifer, bevorzugt gestoppt oder dessen Rotation um seine Längsachse erheblich bzw. zumindest nahezu vollständig gestoppt, während das Glasrohr weiter um seine Längsachse rotiert. Dadurch schnürt sich das Glasrohr im erweichten Bereich an der Trennstelle erfindungsgemäß stärker ein als bei herkömmlichen Verfahren. Durch den kleineren Restquerschnitt im erweichten Bereich vor dem Auseinandertrennen in Verbindung mit einer gesteuerten Abziehbewegung der Abzieheinrichtung fallt das Rohrende nach dem Trennen erfindungsgemäß wesentlich kontrollierter zusammen. Gleichzeitig wird durch die erfindungsgemäß deutlich bessere Einschnürung der Übergangsbereich vom festen zum erweichten Bereich bereits geeignet vorgeformt, so dass es an dieser Stelle zu einer gleichmäßigeren Rundung kommt, was sich positiv auf die Gleichförmigkeit der Bodenformung und damit Stabilität des abgetrennen Glasrohrs im Bodenbereich auswirkt. Insbesondere lassen sich so erfmdungsgemäß wärmeweich verschlossene Endabschnitte mit einem nahezu flachen Boden erzielen.

Eine Vorrichtung zum wärmeweichen Verschließen von Glasrohren gemäß der vorliegenden Erfindung umfasst eine Heizeinrichtung, um einen Endabschnitt des Glasrohrs zu erweichen, eine Fördereinrichtung, um das Glasrohr entlang einer Förderstrecke mit einer konstanten Geschwindigkeit zu fördern und quer zur Längsachse des Glasrohrs entlang der Heizeinrichtung zu fördern, und eine Abzieheinrichtung, um einen von der Heizeinrichtung erweichten Endabschnitt von dem Glasrohr abzuziehen. Dabei ist die Fördereinrichtung so ausgelegt, um das Glasrohr, während es entlang der Heizeinrichtung gefördert wird, um seine Längsachse zu drehen, wobei die Abzieheinrichtung drehstarr ist oder sich mit einer Winkelgeschwindigkeit, die verschieden ist zu der Winkelgeschwindigkeit des Glasrohrs, dreht, um den erweichten Endabschnitt so von dem Glasrohr abzuziehen, dass das Glasrohr an der Trennstelle zugeschmolzen wird. Erfindungsgemäß weist die Fördereinrichtung eine Mehrzahl von Kontaktstiften, welche das Glasrohr abschnittsweise berühren, um das Glasrohr entlang der Heizeinrichtung zu schieben, und zumindest eine ortsfeste Auflageleiste auf, die schräg aufwärts geneigt geneigt ist und auf welcher das bewegte Glasrohr aufliegt und durch das Fördern entlang der Förderstrecke und durch Abrollen auf der Auflageleiste in eine Rotation um die Längsachse versetzt wird, um in einer rollenden Vorwärtsbewegung mit konstanter Geschwindigkeit quer zur Längsachse entlang der Abzieheinrichtung gefördert zu werden, wobei der Abzieheinrichtung zumindest ein Antrieb zugeordnet ist, um die Abzieheinrichtung korrespondierend zur Bewegung des Glasrohrs quer zur Längsachse zu bewegen, während der Endabschnitt von der Trennstelle abgezogen wird.

Gemäß einer weiteren Ausführungsform wird der jeweilige Antrieb von einem Prozessor so gesteuert, dass die Abzieheinrichtung entlang einer Abziehkurve korrespondierend zur Bewegung des Glasrohrs quer zur Längsachse verstellt wird.

Gemäß einer weiteren Ausführungsform steuert der Prozessor die Abziehkurve in Abhängigkeit vom Durchmesser und/oder von der Bewegung des Glasrohrs quer zur Längsachse und/oder vom Typ des zu verschließenden Glasrohrs. So kann einerseits eine exakt zentrierte Positionierung und Relativlage der Abzieheinrichtung relativ zu dem Rohrende auch für unterschiedliche Rohrdurchmesser gewährleistet werden. Andererseits können auch der Typ und/oder die spätere Verwendung des zu verschließenden Glasrohrs mit in die Steuerung der Abziehkurve einfließen. So kann beispielsweise zur Erzielung eines sehr flachen Bodens des zu verschließenden Glasrohrs die Abzieheinrichtung exakt synchron zur Bewegung des Glasrohrs im Abtrennbereich geführt werden, während eine geringfügige Abweichung der Abziehkurve zur Bewegung des Glasrohrs beispielsweise zur Ausbildung von leicht gewölbten Böden des zu verschließenden Glasrohrs verwendet werden kann.

Gemäß einer weiteren Ausführungsform ist weiterhin ein Sensor vorgesehen, um den Durchmesser und/oder die Bewegung des Glasrohrs quer zur Längsachse und/oder den Typ des zu verschließenden Glasrohrs zu erfassen, sodass der Prozessor die Abziehkurve basierend auf dem erfassten Durchmesser und/oder der Bewegung des Glasrohrs quer zur Längsachse und/oder dem Typ des zu verschließenden Glasrohrs steuert. Die Steuerung kann insbesondere anhand einer Nachschlagetabelle oder einer Steuerfunktion, die in der Steuereinrichtung hinterlegt sein können, gesteuert werden.

### FIGURENÜBERSICHT

Nachfolgend wird die Erfindung in beispielhafter Weise und unter Bezugnahme auf die beigefügten Zeichnungen beschrieben werden, woraus sich weitere Vorteile, Merkmale und zu lösende Aufgaben ergeben werden. Es zeigen:
- Fig. 1: in einer schematischen Seitenansicht eine Vorrichtung zum wärmeweichen Verschließen von Glasrohren gemäß der vorliegenden Erfindung;
- Fig. 2: die Vorrichtung gemäß der Fig. 1 in einer schematischen Draufsicht;
- Fig. 3a: in einer vergrößerten Darstellung eine Trennstelle zur Erläuterung des Abtrennens eines wärmeweichen Endabschnitts und Verschließens des Glasrohrs bei einem Verfahren nach der vorliegenden Erfindung;
- Fig. 3b: in einer vergrößerten Darstellung eine Trennstelle zur Erläuterung des Abtrennens eines wärmeweichen Endabschnitts und Verschließens des Glasrohrs gemäß einer weiteren Ausführungsform nach der vorliegenden Erfindung; und
- Fig. 4: ein Beispiel für eine Nachschlagetabelle zum Steuern der Vorrichtung nach der Fig. 1.

In den Figuren bezeichnen identische Bezugszeichen identische oder im Wesentlichen gleichwirkende Elemente oder Elementgruppen.

### AUSFÜHRLICHE BESCHREIBUNG VON BEVORZUGTEN AUSFÜHRUNGSBEISPIELEN

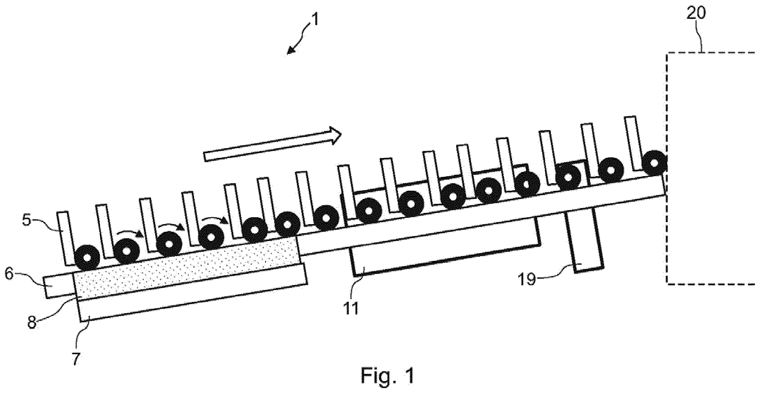

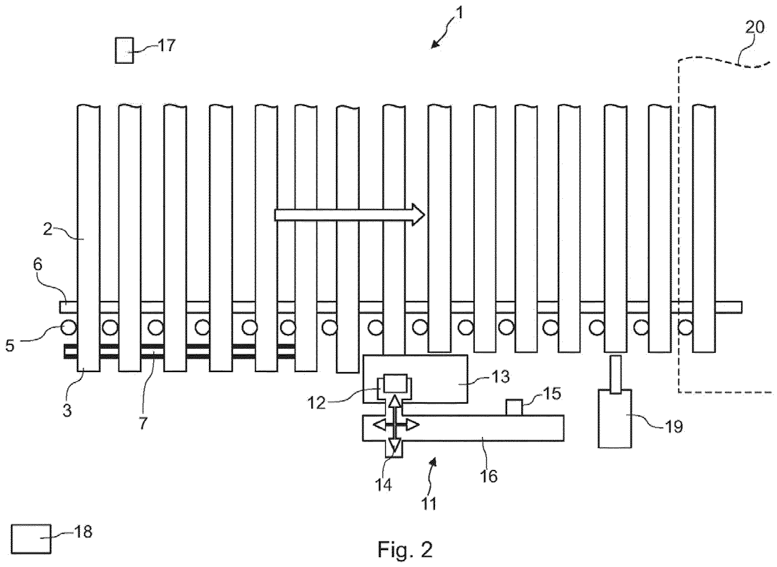

Gemäß den Figuren 1 und 2 werden Glasrohre 2 von einem Glasrohrstrang geeignet abgelängt, beispielsweise in Längen von 1,5 m, und auf einer Förderstrecke abgelegt, die mittels vertikalen Kontaktstiften 5 in regelmäßige Segmente unterteilt ist, in denen jeweils ein Glasrohr 2 aufgenommen ist. Die Kontaktstifte 5 werden mittels eines Förderbands (nicht dargestellt) kontinuierlich in Pfeilrichtung bewegt, und zwar mit einer Geschwindigkeit, die auf die Geschwindigkeit des einlaufenden Glasrohrstrangs (nicht dargestellt) der Glasrohrherstellungsanlage abgestimmt und synchronisiert ist.

Die Glasrohre 2 werden somit nur lokal an den Kontaktstiften 5 berührt, und zwar in der Nähe der abzuschmelzenden Endabschnitte 3. Am gegenüberliegenden Ende der Glasrohre ist eine weitere Reihe von Kontaktstiften 5 vorgesehen (nicht dargestellt), sodass die Glasrohre 2 symmetrisch in den von den Kontaktstiften 5 ausgebildeten Aufnahmen abgelegt sind. Der weitaus größte Teil der Umfangswand der Glasrohre 2 liegt nicht auf. Wie in der Fig. 1 dargestellt, liegen die Glasrohre 2 nahe den Endabschnitten 3 auf einer ortsfesten Auflageleiste 6 auf, die unter einem Winkel von etwa 3° bis 25° schräg aufwärts verläuft. Durch die Hangabtriebskraft auf Grund der Steigung der Förderstrecke liegen die Glasrohre 2 definiert am nachfolgenden Kontaktstift 5 an. Da die Glasrohre 2 gleichzeitig von den Kontaktstiften 5 weiter geschoben werden, werden die Glasrohre 2 in eine gleichmäßige rollende Vorwärtsbewegung versetzt, wie durch die Drehpfeile in der Fig. 1 angedeutet, wobei die Winkelgeschwindigkeit in bekannter Weise durch die Fördergeschwindigkeit und den Außenradius der Glasrohrs 2 vorgegeben ist.

Zur Vermeidung von Kratzern und Abriebspuren auf den Glasrohren bestehen die rohrberührenden Kontaktwerkstoffe (Kontaktstifte 5, Auflageleisten 6) typischerweise aus Materialien, die geringe Reibwerte besitzen, verschleiß arm sind und keine Spuren am Glasrohr 2 hinterlassen und ausreichend warmfest sind, z.B. aus Kunststoffen wie Teflon oder aus Graphit.

Auf diese Weise werden die Glasrohre 2 mit einer gleichmäßigen rollenden Vorwärtsbewegung durch einen Erwärmungsbereich 8 gefördert, der z.B. von einer Brennerleiste 7 bestehend aus einer Reihe von gleichmäßig zueinander beabstandeten Einzelbrennern ausgebildet ist. In dem Erwärmungsbereich 8 werden die Endbereiche 3 erhitzt, bis diese wärmeweich abgetrennt und abgeschmolzen werden können, wie nachfolgend ausführlicher dargelegt.

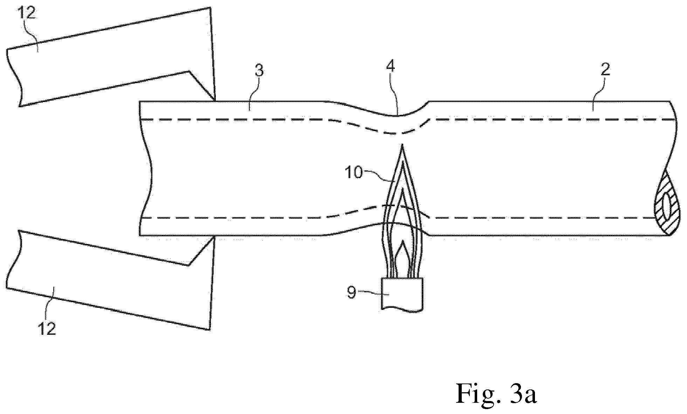

Schließlich werden die Glasrohre 2 unter einer gleichmäßigen rollenden Vorwärtsbewegung entlang einer Abzieheinrichtung 11 gefördert, die einen einzelnen Greifer 12 aufweist, der ausgelegt ist, um die Endabschnitte 3 axial, d.h. entlang der Längsachse der Glasrohre 2 (y-Richtung), abzuziehen. Zweckmäßig wird der Greifer 12 hierzu von zwei Greifzangen ausgebildet, wie schematisch in der Fig. 3a abgebildet, sodass die Vorrichtung rasch auf andere Rohrdurchmesser abgestimmt werden kann.

Der Abzieheinrichtung 11 sind Antriebsmotoren 14, 15 zugeordnet, bevorzugt elektrische Linearmotoren, die den Greifer 12 in Entsprechung zur Vorwärtsbewegung der Glasrohre 2 bewegen, wenn der Greifer 12 den abzutrennenden Endabschnitt 3 gegriffen hält. Hierzu ist eine Bewegung der Abzieheinrichtung 11 einerseits parallel zur Vorwärtsbewegung der Glasrohre 2 (x-Richtung) erforderlich, sowie zum Abziehen des Endabschnitts 3 in Richtung der Längsachse der Glasrohre 2 (y-Richtung), also in zwei zueinander senkrechte Richtungen. Da die Vorwärtsbewegung der Glasrohre 2 aufgrund der Auflage auf der Auflageleiste 6 schräg aufwärts erfolgt, wird hierzu die Abzieheinrichtung so angetrieben, dass die x-Richtung exakt parallel zur Vorwärtsbewegung der Glasrohre 2 ist, also ebenfalls schräg aufwärts gerichtet ist, wie in der Fig. 2 schematisch durch das Bezugszeichen 16 angedeutet. Zum axialen Abziehen des wärmeweichen Endabschnitts 3 ist der Antrieb 14 zum Verstellen des Greifers 12 entlang der Längsachse der Glasrohre 2 vorgesehen.

Aus Vereinfachungsgründen ist in den Figuren 1 und 2 dargestellt, dass der Abtrennbereich, in welchem die Abzieheinrichtung 11 die Endabschnitte 3 abtrennt, dem Erwärmungsbereich 8 nachgeordnet ist. Grundsätzlich können jedoch beide Bereiche auch teilweise oder vollständig überlappen.

Unterhalb des Abtrennbereichs befindet sich eine Auffangwanne 13 zum Auffangen der abgetrennten Endabschnitte 3, sodass keine Gefahr von Verunreinigung nachfolgender Rohre besteht. Dem Abtrennbereich nachgeordnet ist eine Blasdüse 19 vorgesehen, mittels der die Form eines verschlossenen Endabschnitts des Glasrohrs 2 nahe der Trennstelle beeinflusst werden kann, Wie durch die gestrichelte Linie 20 angedeutet, ist dem Abtrennbereich ferner ein Abkühlofen nachgeordnet, welchen die Glasrohre 2 zum Abbau von inneren Spannungen durchlaufen. Die gesamte Rohrenden-Bearbeitungsvorrichtung 1 oder Teilabschnitte hiervon, beispielsweise der Erwärmungsbereich 8 oder der Abtrennbereich, können mittels eines Gehäuse oder einer Abdeckung gegen Einflüsse der Umgebung abgeschirmt sein.

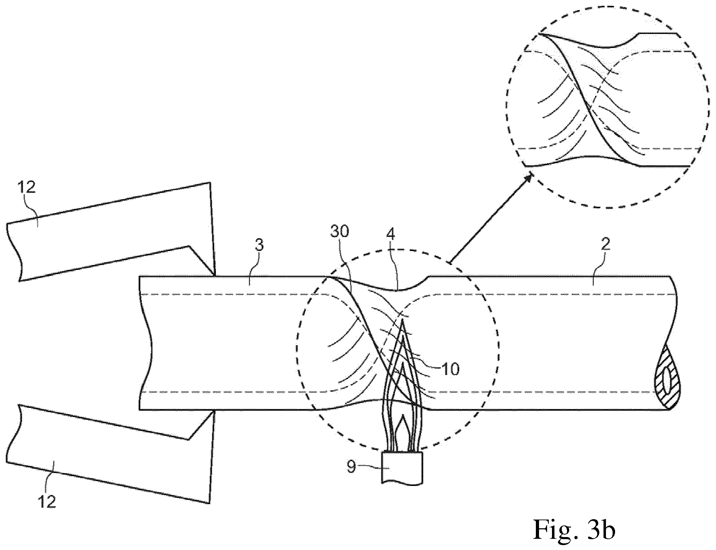

Nachfolgend wird anhand der Figuren 3a und 3b der Vorgang des Abtrennens der Endabschnitte 3 und des Verschließens der Glasrohre näher erläutert. Bei der rollenden Vorwärtsbewegung laufen die Glasrohre 2 über eine oder mehrere Brennerleisten 7. Dabei wird von der sehr schmalen Flamme ein definierter ringförmiger Bereich des Glasrohrs gleichmäßig erhitzt, sodass sich schließlich eine Einschnürung 4 ausbildet.

Im wärmeweichen Zustand wird nun der rohrförmige Endabschnitt 3 vom Greifer 12 gegriffen. Erfindungsgemäß ist der Greifer 12 bevorzugt entweder drehstarr (vgl. Fig. 3b) oder dieser dreht sich mit einer Winkelgeschwindigkeit, die verschieden ist zu der Winkelgeschwindigkeit des Glasrohrs (vgl. Fig. 3a). Zweckmäßig ist die Differenz in den Winkelgeschwindigkeiten möglichst groß, der Greifer also nahezu drehstarr (nicht drehend).

Da das Glasrohr 2 weiter rollend an dem Greifer 12 vorbeibewegt wird, kommt es schließlich zu einem Verdrillen des Einschnürbereichs 4. Diese Verdrillung im Einschnürbereich 4 ist in der Fig. 3b durch das Bezugszeichen 30 und die gegenläufigen Schraffuren in der Nähe der Linie 30 angedeutet. Dabei sei angemerkt, dass der Fig. 3b ein Verfahren zugrunde liegen soll, bei dem der Greifer 12 drehstarr ist, sodass der von dem Greifer 12 gehaltene Endabschnitt 3 sich nicht weiter dreht, während das Glasrohr 2 weiter um seine Längsachse rotiert, was zu der Verdrillung des Glasrohrs entlang der Linie 30 führt.

Beim weiteren Abziehen des wärmeweichen Endabschnitts 3 in Richtung der Längsachse des Glasrohrs 2 reißt der verdrillte Einschnürbereich 4 schließlich ab und die wärmeweichen Wandabschnitte des Glasrohrs 2 klappen zurück, um schließlich in gegenseitige Anlage zu geraten und miteinander zu verschmelzen. Dieser Effekt wird durch die gleichmäßige Rollbewegung der Glasrohre 2 noch weiter unterstützt, sodass sich erfindungsgemäß ein gleichmäßiger Boden am Ende des Glasrohrs 2 ausbildet. Die Form dieses Bodens kann durch die Temperaturbedingungen im Abtrennbereich, durch die Winkelgeschwindigkeit des Glasrohrs sowie durch die Umgebungsbedingungen weiter beeinflusst werden, insbesondere auch durch eine dem Abtrennbereich nachgeordnete Blasdüse 19, wie in der Fig. 1 dargestellt, welche das vorgenannte Zurückklappen der wärmeweichen Wandabschnitte des Glasrohrs 2 nach dem Abtrennen des Endabschnitts 3 aufeinander zu weiter unterstützt, um ein Verschließen des Glasrohrs 2 nach dem eigentlichen Abtrennvorgang zu beschleunigen bzw. weiter zu unterstützen und die Bodenform des noch wärmeweichen, sich gerade ausbildenden Bodens des Glasrohrs 2 geeignet zu beeinflussen.

Damit der Einschnürbereich 4 nach dem Abtrennen des Endabschnitts 3 gleichmäßig einfällt und sich ein gleichmäßiger Boden ausbildet, wird der Greifer 12 erfindungsgemäß während des Abziehens der wärmeweichen Endabschnitts 3 in Richtung der Längsachse entlang einer Abziehkurve korrespondierend zur Bewegung des Glasrohrs 2 bewegt.

Bevorzugt erfolgt die Bewegung des Greifers 12 in x-Richtung exakt synchron zur Bewegung des Glasrohrs 2 im Abtrennbereich, also beim Beispiel nach der Fig. 1 horizontal und vertikal, d.h. schräg aufwärts gerichtet (in x-Richtung). Ferner erfolgt die Abziehbewegung des Greifers 12 in y-Richtung exakt parallel zur Längsachse des Glasrohrs 2 (in y-Richtung). Hierzu ist eine genaue Kenntnis des Rohrdurchmessers der Glasrohre 2 erforderlich. Dieser kann einer Steuereinrichtung 18, beispielsweise einem Mikroprozessor, welcher die Abzieheinrichtung 11 steuert, eingegeben werden oder dort hinterlegt sein. In Kenntnis des Rohrdurchmessers kann der Greifer 12 stets auch exakt zentrisch zum Glasrohr 12 positioniert und geführt werden.

Bei der Vorrichtung gemäß der Erfindung wird das Rohrende durch den Greifer 12 bevorzugt gestoppt (keine Rotation), während das Rohr weiter rotiert, wie in der Fig. 3b dargestellt. Dadurch schnürt sich das Rohr im erweichten Bereich stärker ein. Durch den kleineren Restquerschnitt im erweichten Bereich vor dem Auseinandertrennen in Verbindung mit der gesteuerten Abziehbewegung des Greifers 12 fällt das Rohrende nach dem Trennen wesentlich kontrollierter zusammen. Gleichzeitig wird durch die deutlich bessere Einschnürung der Übergangsbereich vom festen zum erweichten Bereich bereits vorgeformt, so dass es an dieser Stelle zu einer gleichmäßigeren Rundung kommt, was sich positiv auf die Gleichförmigkeit der Bodenformung und damit Stabilität des Rohrs im Bodenbereich auswirkt.

Gemäß einer bevorzugten Ausführungsform können wichtige Parameter der Bewegung des Glasrohrs 2, insbesondere dessen Rohrdurchmesser und Bewegung entlang der Abzieheinrichtung 11, mit Hilfe eines oder mehrerer Sensoren 17 (vgl. Fig. 2) erfasst werden, beispielsweise mit Hilfe von optischen Sensoren, einer Kamera mit Bildauswertungssoftware oder einem Laser. Die erfassten Messdaten werden der Steuereinrichtung 18 zur Steuerung der Abziehkurve der Abzieheinrichtung 11 eingegeben.

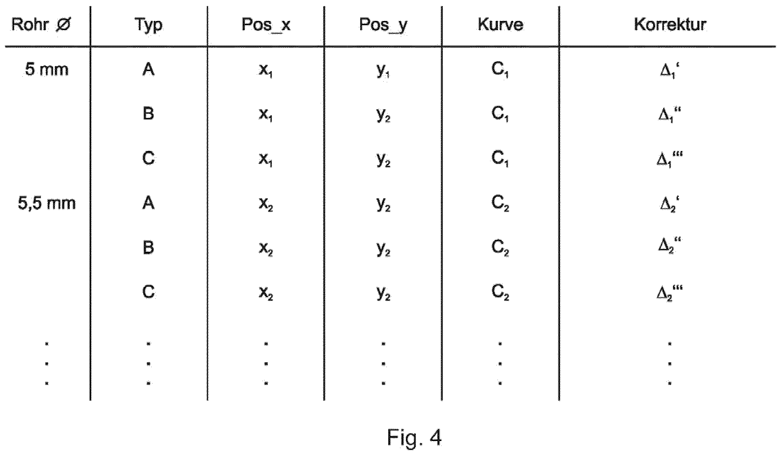

Gemäß einer weiteren Ausführungsform kann die Abziehkurve der Abzieheinrichtung 11 auch bewusst etwas abweichend zur Längsachse (y-Richtung) und/oder Bewegung der Glasrohre 2 in x-Richtung gesteuert werden, um so die Form des Verschlusses am Glasrohrende und die Prozessbedingungen beim Abtrennen und Verschließen des Glasrohrs 2 gezielt zu beeinflussen. Insbesondere können durch die Steuereinrichtung 18 je nach Typ des zu verschließenden Glasrohrs 2, beispielsweise in Abhängigkeit von dem Verwendungszweck (z.B. für Glasampulle, Glasfläschchen, Glasspritze, Glashohlkörper), unterschiedliche Abzieh- und Abschmelzbedingungen für denselben Rohrdurchmesser vorgegeben werden. Dies ist schematisch in der Fig. 4 dargestellt, die schematisch eine von der Steuereinrichtung zu verwendende Nachschlagetabelle darstellt.

In der Nachschlagetabelle sind jedem Rohrdurchmesser verschiedene weitere Parameter und Steuergrößen zugeordnet, welche die von der Abzieheinrichtung 11 auszuführende Abziehkurve weiter beeinflussen können. Neben dem Typ des zu verschließenden Glasrohrs 2, wie vorstehend ausgeführt, können hierzu insbesondere die Positionen in den beiden Raumrichtungen quer zur Längsachse bzw. parallel zur Längsachse des Glasrohrs (x- und y-Richtung) für eine zum Glasrohr zentrierte Startposition der Abziehkurve, wichtige Parameter C der Abziehkurve selbst, wie beispielsweise die (auch zeitabhängigen) Geschwindigkeiten und/oder Beschleunigungen in den beiden Raumrichtungen quer zur Längsachse bzw. parallel zur Längsachse des Glasrohrs (x- und y-Richtung) sowie Korrekturgrößen Δ, welche eine Abweichung der Abziehkurve von einer exakt synchronen Bewegung zum Glasrohr entlang der Abzieheinrichtung 11 bzw. von der Richtung der Längsachse des Glasrohrs betreffen, hinterlegt sein. Basierend auf diesen Parametern berechnet die Steuereinrichtung 18 die von der Abzieheinrichtung 11 auszuführende Abziehkurve. Selbstverständlich können diese Parameter und Steuergrößen auch als Funktion in einem Speicher der Steuereinrichtung 18 hinterlegt sein. Diese Funktion kann auch zeitabhängig variieren.

Durch den Greifer 12 der nachfolgenden x-y-Abzieheinrichtung 11 wird das abzutrennende Rohrendstück erfasst und definiert abgezogen. Die Trennung erfolgt dabei exakt im Bereich der vom Brenner 7 erzeugten Erweichungszone. Gleichzeitig wird das Glasrohr durch das ineinanderfließende Glas aus der Erweichungszone verschlossen. Der Vorzug der Erfindung besteht insbesondere darin, dass der Abziehvorgang innerhalb einer Vorschubteilung mit nur einer Greifzange 12 erfolgt und somit jedes Rohr 2 die gleichen Prozessparameter erfährt. Möglich wird dies insbesondere durch den Einsatz zweier hochdynamischer Linearmotoren in x-y-Anordnung, die bevorzugt exakt synchron zum Vorschub der Förderstrecke laufen. Oder durch Eingabe des Rohrdurchmessers wird der Greifer 12 automatisch mittig zum Rohr 2 zentriert, so dass Änderungen des Durchmessers innerhalb des gesamten Rohrsortiments ohne Greiferwechsel bearbeitet werden können. Die Geschwindigkeiten der Linearmotoren sind frei programmierbar, sodass sich exakt definierbare Abziehkurven vorgeben lassen, d.h. Geschwindigkeitsänderungen während des Abziehvorgangs oder auch kurze Haltezeiten. Eine weitere Besonderheit besteht darin, dass das Rohr 2 rotiert, während das gegriffene Rohrende steht. Dadurch kommt es zu einem leichten Einschnüreffekt, der die Qualität des erzeugten Rohrbodens positiv beeinflusst und eine gleichmäßige Bodenform ergibt. Gleichzeitig ist durch den Greifer ein exaktes Abziehen in Rohrachsrichtung sichergestellt.

Die Vorteile der Erfindung können insbesondere wie folgt zusammen gefasst werden: Mit der Anordnung, wie vorstehend beschrieben, kann ein konstanter verschleiß armer Rohrvorschub einschließlich einer Rollbewegung ohne Takteinheit realisiert werden. Insbesondere bestehen keine Positionierungsfehler, wie diese bei getakteten Anlagen bestehen. Durch den Abrollvorgang des Rohres auf der Förderstrecke können einfache, lineare Erweichungsbrenner anstelle von Ringbrennern unterhalb der Rohre eingesetzt werden. Dadurch entfällt die gegenseitige Flammenbeeinflussung wie bei Ringbrennern. Weniger Brennerverschleiß durch nach oben entweichende Abgase ist die Folge. Toleranzen innerhalb der einzelnen Brennerdüsen bei Ringbrennern ergeben herkömmlich ungleichförmige Temperaturen über dem Rohrumfang. Dieser Nachteil entfällt bei der Anordnung nach der Erfindung mit rotierendem Rohr oberhalb von Linearbrennern. Ein Brennerwechsel zur Anpassung an unterschiedliche Rohrdurchmesser ist nicht erforderlich. Es besteht durch den fixen Abstand der Brenner zur Rohrauflage immer ein konstanter Abstand der Brenner zum Rohr. Bewegte Brenner sind erfindungsgemäß nicht erforderlich, was zu einer Verminderung des Unfallrisikos durch Vermeidung bewegter Energieleitungen führt. Insgesamt ergibt sich dadurch eine sehr homogene, gut regelbare Erweichungszone für einen sehr gleichmäßigen Abziehvorgang. Erfindungsgemäß ist nur eine Greifzange erforderlich, sodass identische Bedingungen für jedes Rohr vorherrschen. Ferner ist eine automatische, rohrdurchmessergesteuerte Zangenpositionierung und -zentrierung in Bewegungsrichtung gewährleistet. Eine servogesteuerte Abziehgeschwindigkeit mit definierter Geschwindigkeitskurve stellt einen gleichmäßigen Verschluss an den Enden der Glasrohre sicher. Weitere Vorteile sind eine geringere Temperatureinbringung und damit weniger Ausgasungsrückstande im Rohr, eine beeinflussbare Bodenform, insbesondere mittels einer nachgeschalteten Blasdüse sowie ein modularer Aufbau mit einfacher Integrationsmöglichkeit in bestehende Linien.

Das erfindungsgemäße Trennverfahren ist in der Lage, Glasrohre mit unterschiedlichen Durchmessern und Wandstärken flexibel und ohne Werkzeugwechsel zu verschließen. Eine bevorzugte Anwendung ist das wärmeweiche Verschließen von Glasrohren zur Herstellung von Ampullen, Karpulen, Spritzen oder Fläschchen zur Aufbewahrung von pharmazeutisch wirksamen Substanzen.

Wie dem Fachmann beim Studium der vorliegenden Anmeldung ersichtlich sein wird, können zahlreiche weitere Modifikationen zu den vorstehend offenbarten Ausführungsbeispielen vorgenommen werden, ohne von dem allgemeinen Lösungsgedanken und dem Schutzbereich der vorliegenden Erfindung, wie durch die beifügten Patentansprüche festgelegt, abzuweichen. Insbesondere können die Merkmale und Aspekte der vorliegenden Erfindung auch in anderer Weise, als vorstehend anhand der Ausführungsbeispiele offenbart, miteinander kombiniert werden.

### BEZUGSZEICHENLISTE

- 1: Rohrenden-BearbeitungsVorrichtung
- 2: Glasrohr
- 3: Endabschnitt
- 4: Einschnürung
- 5: Fördereinrichtung
- 6: Auflageleiste
- 7: Brennerleiste
- 8: Erwärmungsbereich
- 9: Brenner
- 10: Flamme
- 11: Abzieheinrichtung
- 12: Greifer
- 13: Auffangwanne
- 14: Motor
- 15: Motor
- 16: Abziehkurve / Verstellbahn
- 17: Sensor
- 18: CPU
- 19: Nachgeordnete Blasdüse
- 20: Abkühlofen
- 30: Verdrillung

## Patentansprüche

1. Verfahren zum wärmeweichen Verschließen von Glasrohren, bei welchem Verfahren
das Glasrohr (2) an einer Trennstelle (4) nahe einem Endabschnitt (3) des Glasrohrs erweicht wird,
das Glasrohr (2) entlang einer Förderstrecke mit einer konstanten Geschwindigkeit gefördert wird und entlang einer Abzieheinrichtung (11) mit einer vorbestimmten Geschwindigkeit quer zur Längsachse gefördert wird, und
das Glasrohr um seine Längsachse gedreht wird, während der Endabschnitt (3) mittels der Abzieheinrichtung (11) von der Trennstelle so abgezogen wird, dass das Glasrohr an der Trennstelle zugeschmolzen wird, wobei
die Abzieheinrichtung (11) drehstarr ist oder sich mit einer Winkelgeschwindigkeit dreht, die verschieden ist zu der Winkelgeschwindigkeit des Glasrohrs, und
die Abzieheinrichtung (11) korrespondierend zur Bewegung des Glasrohrs (2) quer zur Längsachse bewegt wird, während der Endabschnitt (3) von der Trennstelle abgezogen wird,
**dadurch gekennzeichnet, dass** das Glasrohr durch das Fördern entlang der Förderstrecke und Abrollen auf zumindest einer ortsfesten Auflageleiste (6) in eine Rotation um die Längsachse versetzt wird, um in einer rollenden Vorwärtsbewegung mit konstanter Geschwindigkeit quer zur Längsachse entlang der Abzieheinrichtung gefördert zu werden, wobei die Auflageleiste (6) schräg aufwärts geneigt ist.

2. Verfahren nach Anspruch 1, wobei der Abzieheinrichtung (11) zumindest ein Antrieb (14, 15) zugeordnet ist und der jeweilige Antrieb eine Abziehkurve der Abzieheinrichtung korrespondierend zur Bewegung des Glasrohrs in Richtung der Längsachse und/oder quer zur Längsachse vorgibt.

3. Verfahren nach Anspruch 2, wobei die Abziehkurve mittels einer Steuereinrichtung (18) in Abhängigkeit vom Durchmesser und/oder von der Bewegung des Glasrohrs quer zur Längsachse und/oder vom Typ des zu verschließenden Glasrohrs gesteuert wird.

4. Verfahren nach Anspruch 3, wobei der Durchmesser und/oder die Bewegung des Glasrohrs quer zur Längsachse und/oder der Typ des zu verschließenden Glasrohrs von einem Sensor (17) erfasst wird und die Steuereinrichtung (18) basierend auf dem erfassten Durchmesser und/oder der Bewegung des Glasrohrs quer zur Längsachse und/oder dem Typ des zu verschließenden Glasrohrs die Abziehkurve steuert.

5. Verfahren nach einem der vorhergehenden Ansprüche, wobei die Form eines verschlossenen Endabschnitts des Glasrohrs nahe der Trennstelle (4) mittels einer der Abzieheinrichtung (11) nachgeordneten Blasdüse (19) beeinflusst wird.

6. Verfahren nach einem der vorhergehenden Ansprüche, wobei die Abzieheinrichtung (11) eine Rotation des Endabschnitts (3) des Glasrohrs (2) um dessen Längsachse stoppt während das Glasrohr weiter um dessen Längsachse rotiert, um eine stärkere Einschnürung in einem erweichten Bereich an der Trennstelle zu bewirken.

7. Vorrichtung zum wärmeweichen Verschließen von Glasrohren, mit
einer Heizeinrichtung (7), um einen Endabschnitt (3) des Glasrohrs (2) zu erweichen,
einer Fördereinrichtung (5), um das Glasrohr entlang einer Förderstrecke mit einer konstanten Geschwindigkeit zu fördern und das Glasrohr quer zur Längsachse des Glasrohrs entlang der Heizeinrichtung zu fördern, und
einer Abzieheinrichtung (11), um einen von der Heizeinrichtung (7) erweichten Endabschnitt (3) von dem Glasrohr abzuziehen, wobei
die Fördereinrichtung ausgelegt ist, um das Glasrohr, während es entlang der Heizeinrichtung (7) gefördert wird, um seine Längsachse zu drehen und
die Abzieheinrichtung (11) drehstarr angeordnet ist oder sich mit einer Winkelgeschwindigkeit, die verschieden ist zu der Winkelgeschwindigkeit des Glasrohrs, dreht, um den erweichten Endabschnitt (3) so von dem Glasrohr abzuziehen, dass das Glasrohr an der Trennstelle zugeschmolzen wird, **dadurch gekennzeichnet, dass** die Fördereinrichtung eine Mehrzahl von Kontaktstiften (5), welche das Glasrohr abschnittsweise berühren, um das Glasrohr entlang der Heizeinrichtung (7) zu schieben, und zumindest eine ortsfeste Auflageleiste (6) aufweist, die schräg aufwärts geneigt geneigt ist und auf welcher das bewegte Glasrohr aufliegt und durch das Fördern entlang der Förderstrecke und durch Abrollen auf der Auflageleiste in eine Rotation um die Längsachse versetzt wird, um in einer rollenden Vorwärtsbewegung mit konstanter Geschwindigkeit quer zur Längsachse entlang der Abzieheinrichtung gefördert zu werden, wobei der Abzieheinrichtung (11) zumindest ein Antrieb (14, 15) zugeordnet ist, um die Abzieheinrichtung (11) korrespondierend zur Bewegung des Glasrohrs (2) quer zur Längsachse zu bewegen, während der Endabschnitt (3) von der Trennstelle abgezogen wird.

8. Vorrichtung nach Anspruch 7, wobei der jeweilige Antrieb von einer Steuereinrichtung (18) so gesteuert wird, dass die Abzieheinrichtung entlang einer Abziehkurve korrespondierend zur Bewegung des Glasrohrs in Richtung der Längsachse und/oder quer zur Längsachse verstellt wird.

9. Vorrichtung nach Anspruch 8, wobei die Steuereinrichtung (18) die Abziehkurve in Abhängigkeit vom Durchmesser und/oder von der Bewegung des Glasrohrs quer zur Längsachse und/oder vom Typ des zu verschließenden Glasrohrs steuert.

10. Vorrichtung nach Anspruch 9, weiterhin umfassend einen Sensor (17), um den Durchmesser und/oder die Bewegung des Glasrohrs quer zur Längsachse und/oder den Typ des zu verschließenden Glasrohrs zu erfassen, sodass die Steuereinrichtung (18) die Abziehkurve basierend auf dem erfassten Durchmesser und/oder der Bewegung des Glasrohrs quer zur Längsachse und/oder dem Typ des zu verschließenden Glasrohrs steuert.

11. Vorrichtung nach einem der Ansprüche 7 bis 10, wobei die Abzieheinrichtung (11) ausgelegt oder gesteuert ist, um eine Rotation des Endabschnitts (3) des Glasrohrs (2) um dessen Längsachse zu stoppen während das Glasrohr weiter um dessen Längsachse rotiert, um eine stärkere Einschnürung in einem erweichten Bereich an der Trennstelle zu bewirken.

12. Vorrichtung nach einem der Ansprüche 7 bis 11, weiterhin umfassend eine Blasdüse (19), welche der Abzieheinrichtung (11) nachgeordnet ist, um die Form eines verschlossenen Endabschnitts des Glasrohrs nahe der Trennstelle (4) weiter zu beeinflussen.

## Claims

1. A method for the sealing of glass tubes in a hot softened state, in which method
the glass tube (2) is softened at a severing zone (4) near an end portion (3) of the glass tube,
the glass tube (2) is conveyed at a predetermined speed along a conveying path and transverse to its longitudinal axis along a pulling device (11), and
the glass tube is rotated about its longitudinal axis while the end portion (3) is pulled off from the severing zone by means of the pulling device (11) in such a manner that the glass tube is sealed by fusion at the severing zone, wherein
the pulling device (11) is rotationally fixed or rotates at an angular speed which is different to the angular speed of the glass tube, and
the pulling device (11) is moved in correspondence to the movement of the glass tube (2) transverse to the longitudinal axis while the end portion (3) is pulled off from the severing zone,
**characterized in that** the glass tube is put into a rotation about the longitudinal axis by conveying along the conveying path and by rolling on at least one stationary supporting strip (6) so that it is conveyed transverse to the longitudinal axis along the pulling device in a rolling forward movement and at a constant speed, wherein the supporting strip (6) is inclined obliquely upward.

2. The method according to claim 1, wherein at least one drive (14, 15) is assigned to the pulling device (11) and the respective drive defines a pulling-off trajectory of the pulling device corresponding to the movement of the glass tube in the direction of the longitudinal axis and/or transverse to the longitudinal axis.

3. The method according to claim 2, wherein the pulling-off trajectory is controlled by means of a controlling device (18) as a function of the diameter and/or of the movement of the glass tube transverse to the longitudinal axis and/or of the type of the glass tube to be sealed.

4. The method according to claim 3, wherein the diameter and/or the movement of the glass tube transverse to the longitudinal axis and/or the type of the glass tube to be sealed is detected by a sensor (17) and the controlling device (18) controls the pulling-off trajectory based on the detected diameter and/or on the detected movement of the glass tube transverse to the longitudinal axis and/or on the detected type of the glass tube to be sealed.

5. The method according to any of the preceding claims, wherein the shape of a sealed end portion of the glass tube near the severing zone (4) is affected by a blowing nozzle (19) downstream of the pulling device (11).

6. The method according to any of the preceding claims, wherein the pulling device (11) stops a rotation of the end portion (3) of the glass tube (2) about its longitudinal axis while the glass tube continues rotating about its longitudinal axis to effect a greater necking in a softened region at the severing zone.

7. An apparatus for the sealing of glass tubes in a hot softened state, comprising
a heating device (7) for softening an end portion (3) of the glass tube (2),
a conveying device (5) for conveying the glass tube along a conveying path at a constant speed and transverse to the longitudinal axis of the glass tube along the heating device, and
a pulling device (11) for pulling off an end portion (3) of the glass tube softened by the heating device (7), wherein
the conveying device is configured for rotating the glass tube about its longitudinal axis while it is conveyed along the heating device (7), and
the pulling device (11) is rotationally fixed or rotates at an angular speed which is different to the angular speed of the glass tube, for pulling off the softened end portion (3) from the glass tube in such a manner that the glass tube is sealed by fusion at the severing zone, **characterized in that** the conveying device comprises a plurality of contact pins (5), which contact the glass tube in sections, for pushing the glass tube along the heating device (7), and at least one stationary supporting strip (6), which is inclined obliquely upward and on which the moving glass tube is supported and put into a rotation about the longitudinal axis by the conveying along the conveying path and by rolling on the supporting strip (6), to be conveyed transverse to the longitudinal axis and at constant speed along the pulling device in a rolling forward movement, wherein at least one drive (14, 15) is assigned to the pulling device (11) for moving the pulling device (11) transverse to the longitudinal direction in correspondence to the movement of the glass tube (2) while the end portion (3) is pulled off from the severing zone.

8. The apparatus according to claim 7, wherein the respective drive is controlled by a controlling device (18) such that the pulling device is displaced along a pulling-off trajectory corresponding to the movement of the glass tube in the direction of the longitudinal axis and/or transverse to the longitudinal axis.

9. The apparatus according to claim 8, wherein the controlling device (18) controls the pulling-off trajectory as a function of the diameter and/or of the movement of the glass tube transverse to the longitudinal axis and/or of the type of the glass tube to be sealed.

10. The apparatus according to claim 9, further comprising a sensor (17) for detecting the diameter and/or the movement of the glass tube transverse to the longitudinal axis and/or the type of the glass tube to be sealed, so that the controlling device (18) controls the pulling-off trajectory based on the detected diameter and/or on the detected movement of the glass tube transverse to the longitudinal axis and/or on the detected type of the glass tube to be sealed.

11. The apparatus according to any of claims 7 to 10, wherein the pulling device (11) is configured or controlled to stop a rotation of the end portion (3) of the glass tube (2) about its longitudinal axis while the glass tube continues rotating about its longitudinal axis to effect a greater necking in a softened region at the severing zone.

12. The apparatus according to any of claims 7 to 11, further comprising a blowing nozzle (19) disposed downstream of the pulling device (11) in order to further affect the shape of a closed end portion of the glass tube near the severing zone (4).

## Revendications

1. Un procédé d'obturation de tubes de verre dans un état de chauffe ramolli, dans lequel:
le tube de verre (2) est ramolli au niveau d'une zone de séparation (4) proche d'une partie d'extrémité (3) du tube de verre,
le tube de verre (2) est transporté avec une vitesse prédéterminée le long d'un chemin de transport et transversalement à son axe longitudinal le long d'un dispositif de tirage (11) ; et
le tube de verre est tourné autour de son axe longitudinal pendant que la partie d'extrémité (3) est tirée de la zone de séparation au moyen d'un dispositif de tirage (11) de telle manière que le tube de verre est obturé par fusion au niveau de la zone de séparation, dans lequel
le dispositif de tirage (11) est fixé en rotation ou tourne avec une vitesse angulaire qui est différente de la vitesse angulaire du tube de verre, et
le dispositif de tirage (11) est déplacement en correspondance avec le mouvement du tube de verre (2) transversalement à l'axe longitudinal pendant que la partie d'extrémité (3) est étirée de la zone de séparation,
**caractérisé en ce que** le tube de verre est mis en rotation autour de l'axe longitudinal au moyen du transport le long du chemin de transport et en roulant sur au moins une bande de support stationnaire (6) de telle manière qu'il est transporté transversalement à l'axe longitudinal le long du dispositif de tirage dans un mouvement de roulage avant et à une vitesse constante, dans lequel la bande de support (6) est inclinée obliquement vers le haut.

2. Le procédé selon la revendication 1, dans lequel au moins un entraînement (14, 15) est associé au dispositif de tirage (11) et l'entraînement respectif définit une trajectoire d'étirement du dispositif de tirage correspondant au mouvement du tube de verre dans la direction de l'axe longitudinal et/ou transversalement à l'axe longitudinal.

3. Le procédé selon la revendication 2, dans lequel la trajectoire de tirage est commandée par un dispositif de commande (18) en fonction du diamètre et/ou du mouvement du tube de verre transversalement à l'axe longitudinal et/ou le type de tube de verre devant être obturé.

4. Le procédé selon la revendication 4, dans lequel le diamètre et/ou le mouvement du tube de verre transversalement à l'axe longitudinal et/ou le type de tube de verre devant être obturé sont détectés par un capteur (17) et le dispositif de commande (18) commande la trajectoire de tirage sur la base du diamètre détecté et/ou du mouvement détecté du tube de verre transversalement à l'axe longitudinal et/ou le type détecté du tube de verre à obturer.

5. Le procédé selon l'une quelconque des revendications précédentes, dans lequel la forme d'une extrémité fermée du tube de verre à proximité de la zone de séparation (4) est influencée par une buse de soufflage (19) en aval du dispositif de tirage (11).

6. Le procédé selon l'une quelconque des revendications précédentes, dans lequel le dispositif de tirage (11) arrête une rotation de la partie d'extrémité (3) du tube de verre autour de son axe longitudinal tandis que le tube de verre continue sa rotation autour de l'axe longitudinal pour réaliser un nez plus accentué dans une région molle de la zone de séparation.

7. Un appareil d'obturation de tubes de verre dans un état de chauffe ramolli, comprenant
un dispositif de chauffage (7) pour ramollir une partie d'extrémité (3) du tube de verre (2),
un dispositif de transport (5) pour transporter le tube de verre le long d'un chemin de transport à une vitesse constante et transversalement à l'axe longitudinal du tube de verre le long du dispositif de chauffage ; et
des moyens de tirage (11) pour tirer une partie d'extrémité (3) du tube de verre ramollie par le dispositif de chauffage (7), dans lequel
le dispositif de transport est configuré pour faire tourner le tube de verre autour de son axe longitudinal tandis qu'il est transporté le long du dispositif de chauffage (7), et
le dispositif de tirage (11) est fixé en rotation ou tourne à une vitesse angulaire différente de la vitesse angulaire du tube de verre, afin de retirer la partie d'extrémité ramollie (3) du tube de verre de manière à fondre le tube de verre au point de séparation, **caractérisé en ce que** le dispositif de transport comporte plusieurs broches de contact (5), lesquelles sectionnent le tube de verre, pousser le tube de verre le long du dispositif de chauffage (7) et au moins une bande de support fixe (6), qui est inclinée obliquement verse le haut et sur laquelle le tube de verre en déplacement est soutenue et mis en rotation autour de l'axe longitudinal par le transport le long du chemin de transport et en roulant sur la bande de support (6), pour être transporté transversalement à l'axe longitudinal et à vitesse constante le long du dispositif de tirage dans un mouvement de roulement avant, dans lequel au moins un entraînement (14, 15) est affecté au dispositif de tirage (11) pour déplacer le dispositif de tirage (11) transversalement à la direction longitudinal en correspondance avec le mouvement du tube de verre (2) tandis que la partie d'extrémité (3) est retirée de la zone de séparation.

8. L'appareil selon la revendication 7, dans lequel l'entraînement respectif est commandé par un dispositif de commande (18) de telle manière que le dispositif de tirage est déplacé le long d'une trajectoire d'étirement correspondant au mouvement du tube de verre dans la direction de l'axe longitudinal et/ou transversalement à l'axe longitudinal.

9. L'appareil selon la revendication 8, dans lequel le dispositif de commande (18) commande la trajectoire d'étirement en fonction du diamètre et/ou du mouvement du tube de verre transversalement à l'axe longitudinal et/ou le type de tube de verre devant être obturé.

10. L'appareil selon la revendication 9, comprenant en outre un capteur (17) pour détecter le diamètre et/ou le mouvement du tube de verre transversalement à l'axe longitudinal et/ou le type de tube de verre à obturer, de telle manière que le dispositif de commande (18) commande la trajectoire de tirage sur la base du diamètre détecté et/ou du mouvement détecté du tube de verre transversalement à l'axe longitudinal et/ou le type détecté du tube de verre à obturer.

11. L'appareil selon l'une quelconque des revendications 7 à 10, dans lequel le dispositif de tirage est configuré ou commandé pour arrêter une rotation de la partie d'extrémité (3) du tube de verre (2) autour de son axe longitudinal tandis que le tube de verre continue sa rotation autour de l'axe longitudinal pour réaliser un nez plus accentué dans une région molle de la zone de séparation.

12. L'appareil selon l'une quelconque des revendications 7 à 11, comprenant en outre une buse de soufflage (19) disposée en aval du dispositif de tirage (11) afin d'affecter encore plus la forme d'une partie d'extrémité fermée du tube de verre proche de la zone de séparation.
